# EUROPEAN PATENT APPLICATION

(11) **EP 3 955 153 A1**
(43) Date of publication of application: **16.02.2022**
(21) Application number: 20809997.8
(22) Date of filing: 12.05.2020
(51) Int. Cl.: G06F 40/166

(54) **METHOD AND APPARATUS FOR INSERTING INFORMATION INTO ONLINE DOCUMENT**

(30) Priority: 21.05.2019 CN 201910423693
(71) Applicant: BEIJING BYTEDANCE NETWORK TECHNOLOGY CO., LTD., Beijing 100041 (CN)
(72) Inventor: LIN, Zihuan, Beijing 100190 (CN); XIN, Hongxiao, Beijing 100190 (CN); ZHAO, Lexi, Beijing 100190 (CN); GUO, Tenghu, Beijing 100190 (CN)
(74) Representative: Dentons UK and Middle East LLP
(86) International application number: PCT/CN2020/089743
(87) International publication number: WO 2020/233444

(57) **Abstract**

A method and apparatus for inserting information into an online document are disclosed, the method comprises: receiving (101) content information at a first area of the current document, the content information including a trigger character and/or a retrieval character; generating (102), in response to the trigger character, a content display interface at a second area of the current document; generating (103), in response to the retrieval character, a content information entry at the content display interface, the content information entry including a contact, a document or a group; and displaying (104), in response to an operation on the content information entry, a link of the content information entry at the first area of the current document. Thus, inserting the information into the online document may be mentioning of a user, inserting of a document, a group name card, a table etc., so that the document has richer expressive ability, and the inserted information can be found by searching and recommending to improve the efficiency of writing.

## Description

### CROSS-REFERENCE OF RELATED APPLICATION

The present application claims priority of the Chinese application No. 201910423693.8, tiled as "Method and Apparatus for Inserting Information into Online Document" filed on May 21st, 2019 by Beijing Bytedance Network Technology Co., Ltd, which is incorporated herein by reference with its entirety.

### TECHNICAL FIELD

The present disclosure relates to the field of information processing, particularly to a method and apparatus for inserting information into an online document.

### BACKGROUND

Currently, an online document may support mentioning users through "@" function to allow the online document to have richer expressive ability. However, there is problems such as the content of the online document inserted through "@" being quite limited and inability to perform targeted searching to obtain inserted content.

### SUMMARY

The present disclosure aims to solve one of the technical problems in related technologies at least to a certain extent.

To this end, a first goal of the present disclosure is to provide a method for inserting information into an online document, to address technical problems that the information content inserted in the online document is quite limited, and inserted content cannot be obtained for targeted searching.

A second goal of the present disclosure is to provide an apparatus for inserting information into an online document.

A third goal of the present disclosure is to provide an electronic device.

A fourth goal of the present disclosure is to provide a computer readable storage medium.

For the above goals, an embodiment of a first aspect of the present disclosure provides a method for inserting information into an online document, including: receiving content information at a first area of the current document, the content information including a trigger character and/or a retrieval character; generating, in response to the trigger character, a content display interface at a second area of the current document; generating, in response to the retrieval character, a content information entry at the content display interface, the content information entry including a contact, a document or a group; and displaying, in response to an operation on the content information entry, a link of the content information entry at the first area of the current document.

Further, said generating the content information entry at the content display interface, includes: displaying a user name of the contact at the content display interface; and/or displaying the document and a name of the document at the content display interface; and/or displaying a group name card of the group at the content display interface.

Further, said displaying, in response to the operation on the content information entry, the link of the content information entry at the first area of the current document includes: displaying, in response to the operation on the contact, the document or the group, a link of the contact, the document or the group at the first area of the current document in accordance with a receiving order of the trigger character and the retrieval character.

Further, the method further includes: displaying a user name card of the contact in response to a click operation on the link of the contact in the content information entry; and/or jumping onto the document in response to a click operation on the link of the document in the content information entry; and/or jumping onto the group in a communication application in response to a click operation on the link of the group in the content information entry.

Further, the method further includes: prior to said jumping onto the document or prior said to jumping onto the group in a communication application, acquiring a current user right corresponding to the current document and determining whether to jump based on the current user right.

In the method for inserting information into an online document according to an embodiment of the present disclosure, content information including a trigger character and/or a retrieval character may be received at a first area of the current document, a content display interface may be generated at a second area of the current document in response to the trigger character, a content information entry including a contact, a document or a group may be generated at the content display interface in response to the retrieval character, and a link of the content information entry may be displayed at the first area of the current document in response to an operation on the content information entry. Thus, inserting the information into the online document may be mentioning of a user, inserting of a document, a group name card, and a table etc., so that the document has richer expressive ability, and the inserted information can be found quickly by searching to improve the efficiency of writing.

For the above goal, an embodiment of a second aspect of the present disclosure provides an apparatus for inserting information into an online document, including: a receiving module, configured to receive content information at a first area of an current document, the content information including a trigger character and/or a retrieval character; a first generating module, configured to generate, in response to the trigger character, a content display interface at a second area of the current document; a second generating module, configured to generate, in response to the retrieval character, a content information entry at the content display interface, the content information entry including a contact, a document or a group; and a displaying module, configured to display, in response to an operation on the content information entry, a link of the content information entry at the first area of the current document.

Further, the second generating module is further configured to: display a user name of the contact at the content display interface; and/or display the document and a name of the document at the content display interface; and/or display a group name card of the group at the content display interface.

Further, the displaying module is further configured to: display, in response to the operation on the contact, the document or the group, a link of the contact, the document or the group at the first area of the current document in accordance with a receiving order of the trigger character and the retrieval character.

Further, the apparatus further includes: a click displaying module, configured to, display a user name card of the contact in response to a click operation on the link of the contact in the content information entry; and/or a first click jumping module, configured to jump onto the document in response to a click operation on the link of the document in the content information entry; and/or a second click jumping module, configured to jump onto the group in a communication application in response to a click operation on the link of the group in the content information entry.

Further, the apparatus further includes: an acquiring module, configured to acquire a current user right corresponding to the current document; and a determining module, configured to determine whether to jump based on the current user right.

In the apparatus for inserting information into an online document according to an embodiment of the present disclosure, content information including a trigger character and/or a retrieval character may be received at a first area of the current document, a content display interface may be generated at a second area of the current document in response to the trigger character, a content information entry including a contact, a document or a group may be generated at the content display interface in response to the retrieval character, and a link of the content information entry may be displayed at the first area of the current document in response to an operation on the content information entry. Thus, inserting the information into the online document may be mentioning of a user, inserting of a document, a group name card, and a table etc., so that the document has richer expressive ability, and the inserted information can be found quickly by searching to improve the efficiency of writing.

For the above goal, an embodiment of a third aspect of the present disclosure provides an electronic device, including: a memory, a processor and a computer program stored in the memory and executable on the processor, wherein, the processor is configured to, when executing the computer program, implement the above method for inserting information into an online document.

For the above goal, an embodiment of a fourth aspect of the present disclosure provides a computer readable storage medium having a computer program stored thereon, wherein the computer program, when executed by a processor, implement the above method for inserting information into an online document.

Additional aspects and advantages of the present disclosure will be given at least in part in the following description, or become apparent at least in part from the following description, or can be learned from practicing of the present disclosure.

### BRIEF DESCRIPTION OF DRAWINGS

The above and/or additional aspects and advantages of the present disclosure will become clear and easy to understand from the description below in conjunction with the accompanying drawings, in which:
FIG. 1 is a flowchart schematic diagram illustrating a method for inserting information into an online document according to an embodiment of the present disclosure;
FIG. 2 is a flowchart schematic diagram illustrating a method for inserting information into an online document according to another embodiment of the present disclosure;
FIG. 3a, FIG. 3b and FIG. 3c are diagrams showing examples for the method for inserting information into an online document according to embodiments of the present disclosure;
FIG. 4 is a structural schematic diagram illustrating an apparatus for inserting information into an online document according to an embodiment of the present disclosure;
FIG. 5 is a structural schematic diagram illustrating an apparatus for inserting information into an online document according to another embodiment of the present disclosure;
FIG. 6 is a structural schematic diagram illustrating an apparatus for inserting information into an online document according to yet another embodiment of the present disclosure; and
FIG. 7 is a structural schematic diagram illustrating an electronic device according to an embodiment of the present disclosure.

### DESCRIPTION OF EMBODIMENTS

The embodiments of the present disclosure are described in detail below. Examples of the embodiments are shown in the accompanying drawings, wherein the same or similar reference numerals indicate the same or similar elements or elements with the same or similar functions. The embodiments described below with reference to the accompanying drawings are exemplary, and are intended to explain the present disclosure, but should not be construed as limiting the present disclosure..

The embodiments of the method and apparatus for inserting information into an online document of the present disclosure will be described in the follows with reference to the accompanying drawings.

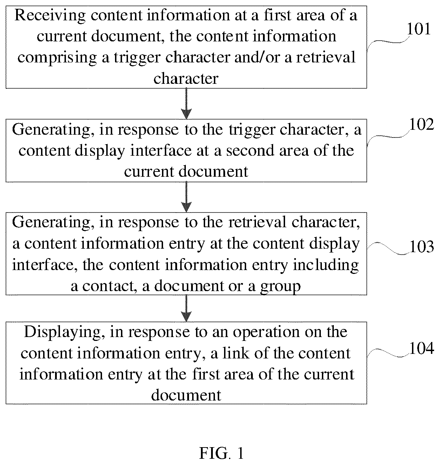

FIG. 1 is a flowchart schematic diagram illustrating a method for inserting information into an online document according to an embodiment of the present disclosure. As shown in FIG. 1, the method for inserting information into an online document may include following steps.

At Step 101, content information is received at a first area of the current document, the content information including a trigger character and/or a retrieval character.

In a practical application, according to a practical need, an online document may support a trigger character such as "@" to mention or indicate a user. However, the information content inserted through the "@" is quite limited, and further support is needed for providing a capacity of inserting information content such as group name card and table and obtaining content inserted for targeted searching.

Thus, in the method for inserting information into an online document proposed by the present disclosure, content information including a trigger character and/or a retrieval character may be received at a specific area of the current document, a content information entry such as a contact, a document or a group may be displayed in response to the trigger character, and a link of the content information entry may be displayed at the first area of the current document in response to an operation on the content information entry. Thus, inserting the information into the online document may be mentioning of a user, inserting of a document, a group name card, and a table etc., so that the document has richer expressive ability, and the inserted information can be found quickly by searching to improve the efficiency of writing.

Particularly, content information may be received at the first area of the current document. It may be understood that, the content information may include one or more types of the trigger character, and/or the retrieval character . Further, the content information may include information in various forms, such as "@" as the trigger character, a user name, a name of the document or a group name as the retrieval character. The content information may be in a form of "@user name@name of the document@ group name" or "@user name name of the document group name", and the user may adjust the content to be inputted according to practical need.

At Step 102, a content display interface is generated at a second area of the current document, in response to the trigger character.

At Step 103, a content information entry including a contact, a document or a group is generated at the content display interface, in response to the retrieval character.

Particularly, the received content information may only include the trigger character, or may include both the trigger character or the retrieval character. In response to the trigger character, the content display interface may be generated at the second area of the document. If only the trigger character is included, a default interface may be displayed at the content display interface and content information such as a contact, a document or a group may be recommended to the user according to the use frequency of the user. If the retrieval character is further included, a content information entry may be generated at the content display interface, for example, a user name of a contact, and/or a document and a name of the document, and/or a group name card of a group may be displayed on the content display interface.

At Step 104, a link of the content information entry is displayed at the first area of the current document, in response to an operation on the content information entry.

Particularly, an operation may be performed on one or more of the content information entries. The link of the content information entry may be displayed at the first area of the current document in response to an operation on the content information entry. As an example, a link of the contact, a document or a group may be displayed at the first area of the current document in accordance with a receiving order of the trigger character and the retrieval character in response to an operation on the contact, the document or the group, and may be displayed at the first area of the document in an order from top to bottom and from left to right according to a retrieving order of the characters. Additionally, the link of the contact, the document or the group may be displayed at a preset position in the first area of the current document according to operation habit of the user.

Based on the above-described embodiment, after step 104, the method may further include: displaying a user name of a contact in response to a click on the contact in the content information entry, and/or jumping onto a document in response to a click on the link of the document in the content information entry, and/or jumping onto a group in response to a click in a communication application on the link of the group in the content information entry.

It needs to be noted that, in order to improve security, prior to jumping onto the document or jumping onto the group in the communication application, the current user right of the current document needs to be obtained, and whether to jump needs to be determined according to the current user right. According to the current user right, whether the user has right to read the document or to join into the group may be determined based on the department or the post which the user belongs to.

For example, in response to the click on the link of the content information entry, different links may have different subsequent operations. For example, for a click on the link of the contact, a user name card of the contact may be displayed, which includes photo, personal information and a chatting start button etc.; for a click on the link of the document, jumping onto the document is performed immediately; and for a click on the link of the group, jumping on to the group in the communication application is performed. Jumping onto the document and/or the group may require the current user to have right to access to improve security.

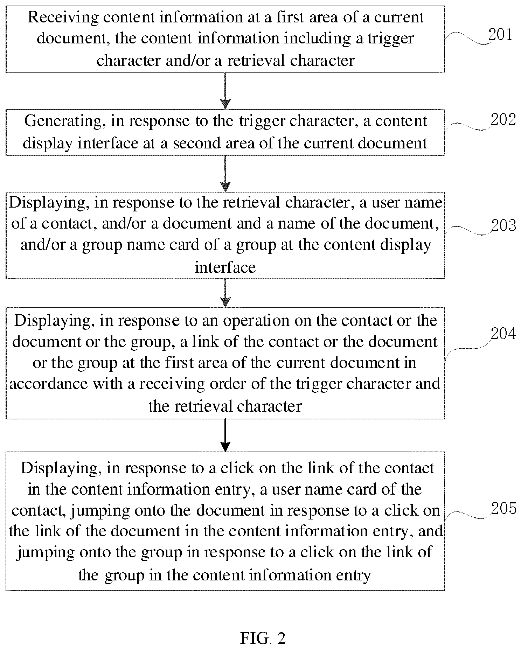

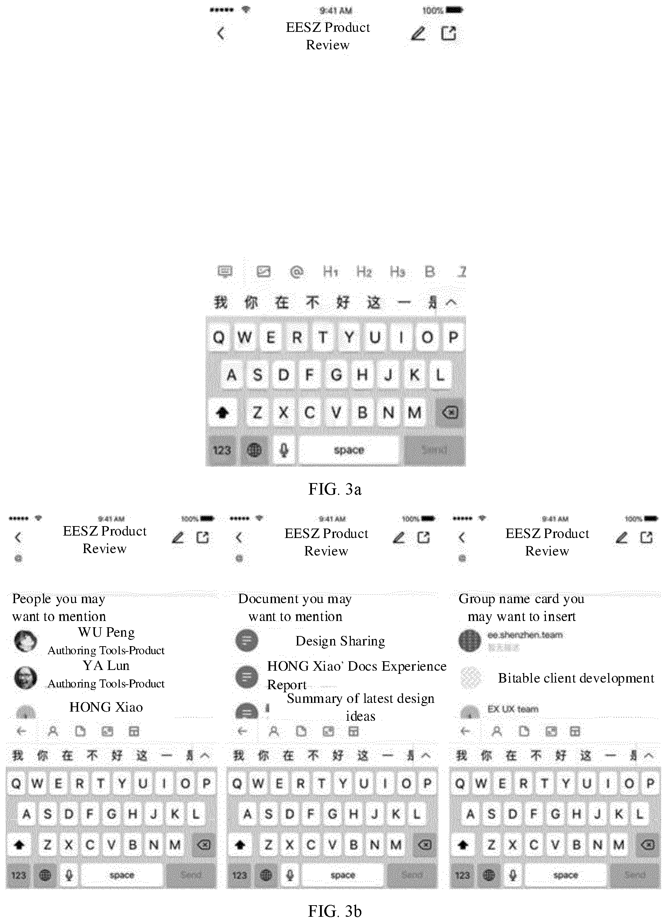

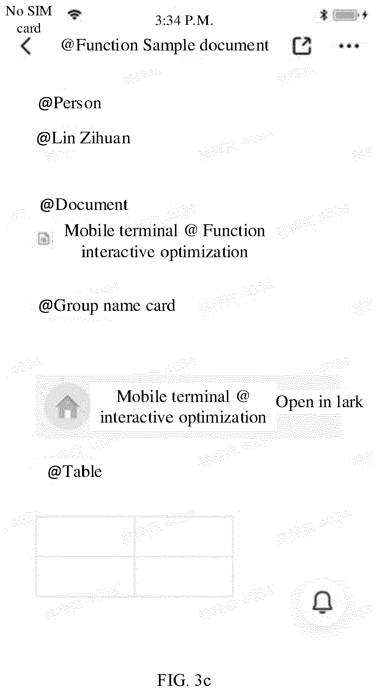

In order for those skilled in the art to better understand the above process, the above process will be illustrated in detail with reference to FIG. 2 and FIG. 3.

FIG. 2 is a flowchart schematic diagram illustrating a method for inserting information into an online document according to another embodiment of the present disclosure. As shown in FIG. 2, the method may include following steps.

At Step 201, content information is received at a first area of the current document, the content information including a trigger character and/or a retrieval character.

At Step 202, in response to the trigger character, a content display interface is generated at a second area of the current document.

At step 203, in response to the retrieval character, a user name of a contact, and/or a document and a name of the document and/or a group name card of a group is displayed on the content display interface.

At step 204, in response to an operation on the contact, the document or the group, a link of the contact, the document or the group is displayed at the first area of the current document in accordance with a receiving order of the trigger character and the retrieval character.

At step 205, the user name card of the contact is displayed in response to a click on the link of the contact in the content information entry, jumping onto the document is performed in response to a click on a link of the document in the content information entry, and jumping onto the group in a communication application is performed in response to a click on a link of the group in the content information entry.

Particularly, as illustrated in FIG. 3, firstly, as in the interface shown in FIG. 3a, a trigger character and/or a retrieval character is received by clicking on the button in the toolbar or on the keyboard, such as @contact/@document/@group/@table.

Secondly, a content display interface is generated in the current document. If only the trigger character is included, a default interface may be displayed at the content display interface as shown in FIG. 3b. If the retrieval character is further included, a content information entry may be generated at the content display interface, for example, a user name of a contact, and/or a document and a name of the document, and/or a group name card of a group may be displayed on the content display interface. Alternatively, in response to an operation on the content information entry, a link of the content information entry may be displayed at the first area of the current document as shown in FIG. 3c, and a user name of a contact and/or a document and a name of the document and/or a group name card of a group may be displayed on the display content interface.

Thirdly, in response to an operation on the contact, the document or the group, a link of the contact, the document or the group may be displayed at the first area of the current document in accordance with a receiving order of the trigger character and the retrieval character, e.g., as shown in FIG. 3c, displayed at the first area of the current document in an order from top to bottom.

Fourthly, in response to a click on a link of the contact in the content information entry, a user name card of the contact may be displayed, and/or in response to a click on a link of the document in the content information entry, jumping onto the document may be performed, and/or in response to a click on a link of the group in the content information entry, jumping on to the group in a communication application may be performed. Thus, by using the trigger character, the current document may be mentioning of a user, inserting of a document, a group name card, a table etc., so that the document has richer expressive ability, and the inserted information can be found by searching and recommending to improve the efficiency of writing.

Thus, in the method for inserting information into an online document according to an embodiment of the present disclosure, content information including a trigger character and/or a retrieval character may be received at a first area of the current document, a content display interface may be generated at a second area of the current document in response to the trigger character, a content information entry including the contact, the document or the group may be generated at the content display interface in response to the retrieval character, and a link of the content information entry may be displayed at the first area of the current document in response to an operation on the content information entry. Thus, inserting the information into the online document may be mentioning of a user, inserting of a document, a group name card, a table etc., so that the document has richer expressive ability, and the inserted information can be found by searching and recommending to improve the efficiency of writing.

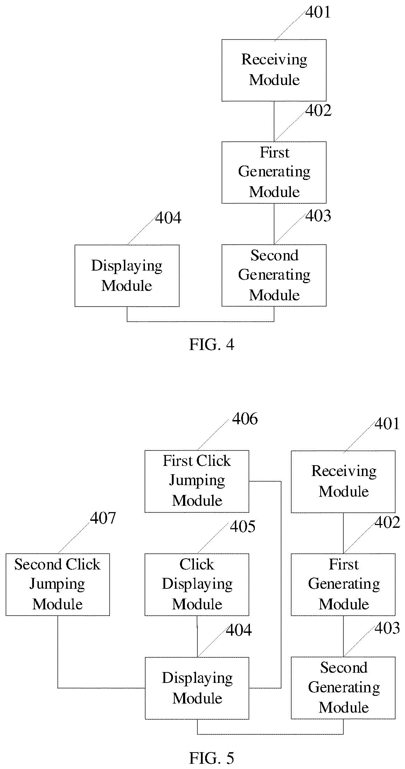

FIG. 4 is a structural schematic diagram illustrating an apparatus for inserting information into an online document according to an embodiment of the present disclosure. As shown in FIG. 4, the apparatus may include a receiving module 401, a first generating module 402, a second generating module 403 and a displaying module 404.

The receiving module 401 may be configured to receive content information at a first area of a current document, the content information including a trigger character and/or a retrieval character.

The first generating module 402 may be configured to generate, in response to the trigger character, a content display interface at a second area of the current document.

The second generating module 403 may be configured to generate, in response to the retrieval character, a content information entry at the content display interface, the content information entry including a contact, a document or a group.

The displaying module 404 may be configured to display, in response to an operation on the content information entry, a link of the content information entry at the first area of the current document.

In an embodiment of the present disclosure, the second generating module 403 may be configured to display a user name of a contact at the content display interface and/or display a document and a name of the document at the content display interface and/or display a group name card of a group at the content display interface.

In an embodiment of the present disclosure, the displaying module 404 may be further configured to: display, in response to the operation on the contact, the document or the group, a link of the contact, the document or the group at the first area of the current document in accordance with a receiving order of the trigger character and the retrieval character.

Further, based on the above embodiment, as shown in FIG. 5, the apparatus may further include a click displaying module 405, a first click jumping module 406 and a second click jumping module 407.

The click displaying module 405 may be configured to, display a user name card of the contact in response to a click operation on the link of the contact in the content information entry.

The first click jumping module 406 may be configured to jump onto the document in response to a click operation on the link of the document in the content information entry.

The second click jumping module 407 may be configured to jump onto the group in a communication application in response to a click operation on the link of the group in the content information entry.

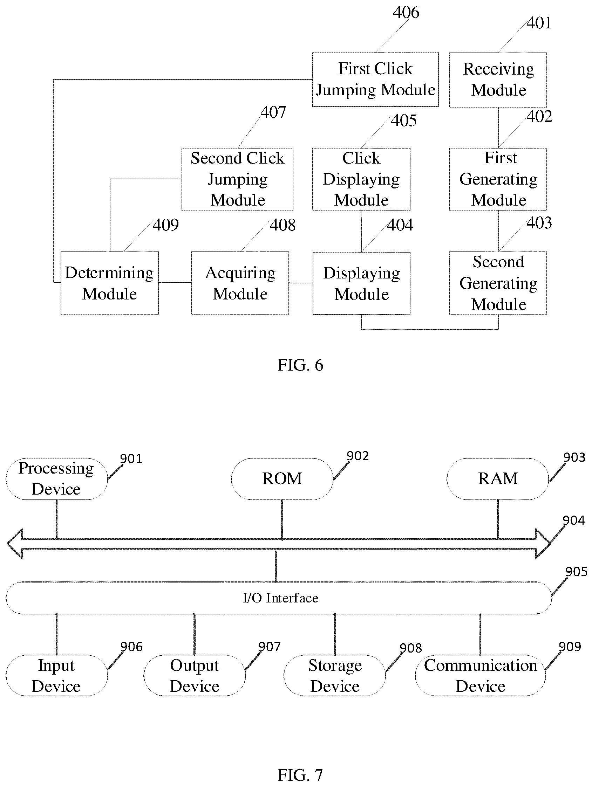

Further, based on the above embodiment, as illustrated in FIG. 6, the apparatus may further include an acquiring module 508 and a determining module 409.

The acquiring module 408 may be configured to acquire the current user right corresponding to the current document.

The determining module 409 may be configured to determine whether to jump based on the current user right.

Thus, in the apparatus for inserting information into the online document according to the embodiment of the present disclosure, content information including a trigger character and/or a retrieval character may be received at a first area of the current document, a content display interface may be generated at a second area of the current document in response to the trigger character, a content information entry including the contact, the document or the group may be generated at the content display interface in response to the retrieval character, and a link of the content information entry may be displayed at the first area of the current document in response to an operation on the content information entry. Thus, inserting the information into the online document may be mentioning of a user, inserting of a document, a group name card, a table etc., so that the document has richer expressive ability, and the inserted information can be found by searching and recommending to improve the efficiency of writing.

Reference is now made to FIG. 7, which is a block diagram showing a structure of an electronic device 900 suitable for implementing an embodiment of the present disclosure. A terminal device according to the embodiment of the present disclosure may include, but not limited to, a mobile terminal such as a mobile phone, a laptop computer, a digital broadcast receiver, a Personal Digital Assistant (PDA), a tablet computer or PAD, a Portable Multimedia Player (PMP), or a vehicle-mounted terminal (e.g., a vehicle-mounted navigation terminal), or a fixed terminal such as a digital TV, a desktop computer, etc. The electronic device illustrated in FIG. 7 is exemplary only, and should not be construed as limiting the function and scope of use of the embodiments of the present disclosure.

As shown in FIG. 7, the electronic device 900 may include a processing device (such as a central processing unit, a graphics processing unit, etc.) 901, which may perform various appropriate actions and processes in accordance with programs stored in a Read Only Memory (ROM) 902 or loaded from a storage device 908 into a Random Access Memory (RAM) 903. In the RAM 903, various programs and data required for operation of the electronic device may also be stored. The processing device 901, the ROM 902, and the RAM 903 are connected to each other through a bus 904. An Input/Output (I/O) interface 905 is also connected to the bus 904.

Generally, the following devices may be connected to the I/O interface 905: an input device 906 including, for example, a touch screen, a touch pad, a keyboard, a mouse, a camera, a microphone, an accelerometer, a gyroscope, etc.; an output device 907 including, for example, a Liquid Crystal Display (LCD), a speaker, an oscillator, etc.; the storage device 908 including, for example, a magnetic tape or a hard disk; and a communication device 909. The communication device 909 may allow the electronic device 900 to perform wireless or wired communication with other devices for data exchange. Although FIG. 7 illustrates the electronic device 900 having various devices, it can be appreciated that it is not necessary to implement or provide all the illustrated devices. Alternatively, more or fewer devices may be implemented or provided.

In particular, according to an embodiment of the present disclosure, the processes described above with reference to the flowcharts may be implemented as computer software programs. For example, an embodiment of the present disclosure includes a computer program product, which includes a computer program carried on a computer-readable medium. The computer program includes program codes for implementing the method illustrated in any of the flowcharts. In these embodiments, the computer program may be downloaded and installed from a network through the communication device 909, or installed from the storage device 908, or installed from the ROM 902. When the computer program is executed by the processing device 901, the above functions defined in the methods according to the embodiments of the present disclosure are performed.

It is to be noted that the above computer-readable medium in the present disclosure may be a computer-readable signal medium or a computer-readable storage medium or any combination thereof. The computer-readable storage medium may be, but not limited to, for example, an electrical, magnetic, optical, electromagnetic, infrared, or semiconductor system, apparatus, or device, or any combination thereof. More specific examples of the computer-readable storage medium may include, but not limited to: an electrical connection having one or more wires, a portable computer disk, a hard disk, a Random Access Memory (RAM), a Read Only Memory (ROM), an Erasable Programmable Read Only Memory (EPROM) or a flash memory, an optical fiber, a Compact Disc Read-Only Memory (CD-ROM), an optical memory device, a magnetic memory device, or any suitable combination thereof. In the present disclosure, the computer-readable storage medium may be any tangible medium including or storing programs, which may be used by or used with an instruction execution system, apparatus, or device. However, in the present disclosure, the computer-readable signal medium may include a data signal propagated in a baseband or as a part of a carrier that carries computer-readable program codes. Such propagated data signal may be in various forms, including but not limited to an electromagnetic signal, an optical signal, or any suitable combination thereof. The computer-readable signal medium may be any computer-readable medium other than the computer-readable storage medium, which may transmit, propagate, or transfer programs used by or used with an instruction execution system, apparatus or device. The program codes stored on the computer-readable medium may be transmitted via any appropriate medium, including but not limited to electric cable, optical cable, Radio Frequency (RF), or any suitable combination thereof.

The above computer-readable medium may be included in the above electronic device; or may be standalone without being assembled into the electronic device.

The above computer-readable medium may carry one or more programs which, when executed by the electronic device, cause the electronic device to: obtaining a page rendering request including: a selected region in the page and a rendering type, the region including at least one cell and/or text data; when the region includes at least one cell, acquiring an identifier of the at least one cell, the identifier of the cell including: a row identifier and a column identifier; and rendering the cell corresponding to the identifier of the at least one cell in accordance with the rendering type.

The computer program code for implementing the operations according to the embodiments of the present disclosure may be written in one or more programming languages or any combination thereof. The programming languages may include object-oriented programming languages, such as Java, Smalltalk, or C++, as well as conventional procedure-oriented programming languages, such as "C" language or similar programming languages. The program codes may be executed completely on a user computer, partly on the user computer, as a standalone software package, partly on the user computer and partly on a remote computer, or completely on the remote computer or server. In a case where the remote computer is involved, the remote computer may be connected to the user computer through any types of network, including a Local Area Network (LAN) or a Wide Area Network (WAN), or to an external computer (e.g., over the Internet by using an Internet service provider).

The flowcharts and block diagrams in the figures illustrate architectures, functions, and operations of possible implementations of systems, methods, and computer program products according to various embodiments of the present disclosure. In this regard, each block in the flowcharts or block diagrams may represent a module, a program segment, or a part of codes. The module, program segment, or part of codes may contain one or more executable instructions for implementing a specified logical function. It is also to be noted that, in some alternative implementations, functions showed in blocks may occur in a different order from the order shown in the figures. For example, two blocks illustrated in succession may actually be executed substantially in parallel with each other, or sometimes even in a reverse order, depending on functions involved. It is also to be noted that each block in the block diagrams and/or flowcharts, or any combination of the blocks in the block diagrams and/or flowcharts, may be implemented using a dedicated hardware-based system that is configured to perform specified functions or operations or using a combination of dedicated hardware and computer instructions.

Units involved and described in the embodiments of the present disclosure may be implemented in software or hardware. A name of a unit does not constitute a limitation on the unit itself under certain circumstances.

The present disclosure further provides a computer-readable storage medium having a computer program stored thereon, the computer program, when executed by a processor, implements the method for inserting information into an online document as described.

The present disclosure further provides a computer program. The program, when executed by a processor, implements the method for inserting information into an online document as described.

In the present disclosure, the description with reference to the terms "one embodiment", "some embodiments", "an example", "a specific example", or "some examples", etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Moreover, the specific features, structures, materials or characteristics as described can be combined in any one or more embodiments or examples as appropriate. In addition, those skilled in the art can combine and integrate different embodiments or examples, or features thereof, as described in the present disclosure, provided that they do not contradict each other.

In addition, the terms "first" and "second" are only used for the purpose of description, and should not be construed as indicating or implying any relative importance or implicitly indicating the number of defined technical features. Therefore, the features defined with "first" and "second" may explicitly or implicitly include at least one of the features. In the description of the present disclosure, "a plurality of" means at least two, e.g., two, three, etc., unless specifically defined otherwise.

## Claims

1. A method for inserting information into an online document, comprising:
receiving content information at a first area of a current document, the content information comprising a trigger character and/or a retrieval character;
generating, in response to the trigger character, a content display interface at a second area of the current document;
generating, in response to the retrieval character, a content information entry at the content display interface, the content information entry comprising a contact, a document or a group; and
displaying, in response to an operation on the content information entry, a link of the content information entry at the first area of the current document.

2. The method according to claim 1, wherein said generating the content information entry at the content display interface comprises:
displaying a user name of the contact at the content display interface; and/or
displaying the document and a name of the document at the content display interface; and/or
displaying a group name card of the group at the content display interface.

3. The method according to claim 1, wherein said displaying, in response to the operation on the content information entry, the link of the content information entry at the first area of the current document comprises:
displaying, in response to the operation on the contact, the document or the group, a link of the contact, the document or the group at the first area of the current document in accordance with a receiving order of the trigger character and the retrieval character.

4. The method according to any one of claims 1 to 3, further comprising:
displaying a user name card of the contact in response to a click operation on the link of the contact in the content information entry; and/or
jumping onto the document in response to a click operation on the link of the document in the content information entry; and/or
jumping onto the group in a communication application in response to a click operation on the link of the group in the content information entry.

5. The method according to any one of claims 1 to 4, further comprising, prior to said jumping onto the document or prior to said jumping onto the group in the communication application:
acquiring a current user right corresponding to the current document; and
determining whether to jump based on the current user right.

6. An apparatus for inserting information into an online document, comprising:
a receiving module configured to receive content information at a first area of a current document, the content information comprising a trigger character and/or a retrieval character;
a first generating module configured to generate, in response to the trigger character, a content display interface at a second area of the current document;
a second generating module configured to generate, in response to the retrieval character, a content information entry at the content display interface, the content information entry comprising a contact, a document or a group; and
a displaying module configured to display, in response to an operation on the content information entry, a link of the content information entry at the first area of the current document.

7. The apparatus according to claim 6, wherein the second generating module is further configured to:
display a user name of the contact at the content display interface; and/or
display the document and a name of the document at the content display interface; and/or display a group name card of the group at the content display interface.

8. The apparatus according to claim 6, wherein the displaying module is further configured to:
display, in response to the operation on the contact, the document or the group, a link of the contact, the document or the group at the first area of the current document in accordance with a receiving order of the trigger character and the retrieval character.

9. The apparatus according to any one of claims 6 to 8, further comprising:
a click displaying module, configured to display a user name card of the contact in response to a click operation on the link of the contact in the content information entry; and/or
a first click jumping module, configured to jump onto the document in response to a click operation on the link of the document in the content information entry; and/or
a second click jumping module, configured to jump onto the group in a communication application in response to a click operation on the link of the group in the content information entry.

10. The apparatus according to any one of claims 6 to 9, further comprising:
an acquiring module configured to acquire a current user right corresponding to the current document; and
a determining module configured to determine whether to jump based on the current user right.

11. An electronic device, comprising:
a memory, a processor and a computer program stored in the memory and executable on the processor, wherein, the processor is configured to, when executing the computer program, implement the method for inserting information into an online document according to any one of claims 1 to 5.

12. A computer readable storage medium, having a computer program stored thereon, wherein the computer program, when executed by a processor, implements the method for inserting information into an online document according to any one of claims 1 to 5.
